# EUROPEAN PATENT APPLICATION

(11) **EP 2 423 165 A1**
(43) Date of publication of application: **29.02.2012**
(21) Application number: 11185781.9
(22) Date of filing: 18.08.2008
(51) Int. Cl.: C01D 3/14, C02F 3/34, C02F 3/10, C02F 3/12

(54) **Process, adapted microbes, composition and apparatus for purification of industrial brine**

(30) Priority: 23.08.2007 US 957676 P
(62) Divisional of application: 08798075.1
(71) Applicant: Dow Global Technologies LLC, Midland, MI 48674 (US)
(72) Inventor: Lume Pereira, Celio, 21684 Stade (DE); Hook, Bruce, Lake Jackson, TX 77566 (US); Lundstroem, Christine, 21706 Drochtersen (DE); Horn, Annett, 21714 Hammah (DE)
(74) Representative: Raynor, John

(57) **Abstract**

A process for obtaining salt-tolerant living microbes capable of oxidizing hydrocarbon compounds in an aqueous brine composition.

## Description

### CROSS-REFERENCE TO RELATED APPLICATIONS

The present application is related to the following applications, filed on even date herewith, with the disclosures of each the applications being incorporated by reference herein in their entireties:
Application No. (Attorney Docket No. 66323), filed on even date herewith, entitled "Brine Purification".
Application No. (Attorney Docket No. 66324), filed on even date herewith, entitled "Total Organic Carbon (TOC) Reduction in Brine Via Chlorinolysis".
Application No. (Attorney Docket No. 66325), filed on even date herewith, entitled "Process and Apparatus for Purification of Industrial Brine".
Application No. (Attorney Docket No. 66327), filed on even date herewith, entitled "Brine Purification".

### Background of the Invention

The present invention relates to processes and apparatus for purification of brine generated by industrial processes. Purified brine may be used in industrial processes such as the chlor-alkali process for electrolytic conversion of brine to chlorine gas and sodium hydroxide or hypochlorite.

Brine is generated by industrial processes that react chlorine atom-containing compounds with an inorganic base such as sodium hydroxide to form an aqueous brine solution containing chloride salts. Examples include the production of epichlorohydrin by reacting chlorohydrins with sodium hydroxide, the production of epoxy resins by reacting epichlorohydrin with polyphenolic compounds, such as bisphenol A or bisphenol F, in which the base reacts with chlorine atoms of the epichlorohydrin and the phenolic hydrogen atoms, and scrubbing of industrial effluent to remove hydrogen chloride from a chemical stream by reacting the hydrogen chloride with sodium hydroxide, such as in the hydrogen chloride absorber used to remove hydrogen chloride during the phosgenation process used to make isocyanates. The aqueous brine solutions produced by such processes often contain one or more organic compounds associated with the process(es) from which the brine is derived.

Aqueous brine solutions containing sodium chloride as the predominant salt are useful for the production of chlorine gas and sodium hydroxide or hypochlorite by an electrolytic process known as the chlor-alkali process. Chlorine gas, hypochlorite and sodium hydroxide produced by the chlor-alkali process are useful in a number of industrial processes in which chlorine atoms and/or a strong base is/are required. It would be desirable to be able to use aqueous brine solutions produced by industrial processes in the chlor-alkali process to integrate industrial chemical processes and thereby reduce raw material acquisition and byproduct disposal costs.

A problem associated with using aqueous brine solutions produced by industrial processes in the chlor-alkali process is that the presence of impurities such as organic compounds in such aqueous brine solutions must generally be reduced to a very low concentration, because the chlor-alkali process has a low tolerance for impurities, including organic compounds, and/or because products of high purity, such as high purity sodium hydroxide, are desired. Generally, the organic compound concentration in aqueous brine used in industrial chlor-alkali production should be less than 50 ppm, and preferably should be less than 10 ppm, total organic carbon (TOC).

A known method for reducing the organic compound concentration in aqueous brine solutions is to conduct chlorinolysis to oxidize organic compounds to more volatile oxidation fragments and/or carbon dioxide that can be stripped from the aqueous brine solution. Chlorinolysis is generally carried out by introducing chlorine gas or hypochlorite into the aqueous brine solution at an elevated temperature. Such a process is disclosed, for example, in U.S. Patent 4,240,885.

A disadvantage of relying solely on chlorinolysis for removal of organic compounds is that substantial amounts of chlorine gas or hypochlorite is generally required to reduce the organic compound concentration to an acceptable level when the initial organic compound concentration prior to chlorinolysis is relatively high. In that case, the purification process consumes a substantial portion of the chlorine gas or hypochlorite generated by the chlor-alkali process to thereby reduce the availability of the chlorine gas or hypochlorite generated by the chlor-alkali process for other industrial processes.

Another disadvantage of relying solely on chlorinolysis is that certain types of compounds such as acids and acid esters are generally more difficult to oxidize to break them down into oxidation fragments sufficiently volatile to be stripped from the aqueous brine solution. Reducing the concentration of such oxygen-containing compounds to an acceptable level via chlorinolysis is difficult and expensive.

Another disadvantage of relying solely on chlorinolysis is that it requires treatment of the vapor stream stripped from the brine solution to prevent discharge of chorine gas, hypochlorite and any chlorinated hydrocarbons into the environment.

Opportunities therefore remain to further improve the purification of aqueous brine solutions containing organic compounds so that the brine can be used for chlor-alkali electrolysis.

### Summary of the Invention

One aspect of the present invention is a process for purifying brine comprising:
(1) providing an aqueous brine solution comprising one or more inorganic salts, one or more organic compounds, and optionally one or more microbial nutrients other than microbial nutrients comprised in the one or more inorganic salts and the one or more organic compounds and
(2) conducting at least one unit operation for removing organic compounds from the aqueous brine solution provided in step (1) to obtain a first purified brine solution,
wherein the aqueous brine solution contains at least about 10 weight-percent of the one or more inorganic salts, at least about 80 weight-percent of the one or more inorganic salts is sodium chloride, and the at least one unit operation comprises:
(a) contacting the aqueous brine solution with living microbes capable of oxidizing the organic compounds in the presence of oxygen;
(b) optionally adding biological nutrients to the aerated aqueous brine solution proportional to microbial demand for biological nutrients not satisfied by the aerated aqueous brine solution; and
(c) separating the microbes from the aqueous brine solution to obtain the first purified brine solution.

Another aspect of the present invention is microbes adapted to grow in the presence of oxygen and a brine solution comprising one or more organic compounds, one or more nutrients other than the one or more organic compounds as required for growth of the microbes, and at least about 17 weight-percent sodium chloride.

Another aspect of the present invention is an aqueous composition comprising one or more organic compounds, a population of living microbes immersed in the aqueous composition in the presence of oxygen, one or more nutrients other than the one or more organic compounds as required for growth of the microbes, and at least about 17 weight-percent sodium chloride.

Another aspect of the present invention is an aerated aqueous composition comprising at least about 15 weight-percent of one or more inorganic salts, one or more organic compounds, a population of living microbes immersed in the aqueous composition in the presence of oxygen, and one or more nutrients other than the one or more organic compounds as required for growth of the microbes, wherein the one or more inorganic salts comprise at least about 80 weight-percent sodium hydroxide.

Another aspect of the present invention is a composition comprising particles having an average particle size in the range from about 1 to about 200 µm and a particle density greater than about 1.5 g/cm³ coated with biofilm comprising microbes and extracellular polymer substances.

Another aspect of the present invention is a process for obtaining salt-tolerant living microbes capable of oxidizing hydrocarbon compounds in an aqueous brine composition comprising sodium chloride comprising:
(1) Providing an aqueous composition comprising living microbes, one or more hydrocarbon compounds, oxygen, an osmotically acceptable concentration of two or more inorganic salts comprising sodium chloride and, optionally, one or more nutrients for the living microbes as required for the respiration, growth and/or propagation of the living microbes and
(2) Increasing the sodium chloride concentration of the aqueous composition at a rate that allows at least some microbes to survive and adapt to the change in sodium chloride concentration,
wherein step (2) comprises increasing the weight ratio of sodium chloride to the other inorganic salt(s) in the aqueous composition.

Another aspect of the present invention is bioreactors for brine purification comprising at least one bioreactor vessel containing salt-tolerant living microbes, wherein the salt-tolerant living microbes are microbes adapted to grow in the presence of oxygen and a brine solution comprising one or more organic compounds, one or more nutrients other than the one or more organic compounds as required for growth of the microbes, and at least about 17 weight-percent sodium chloride and/or microbes obtainable by the above process for obtaining salt-tolerant living microbes.

Another aspect of the present invention is a bioreactor for brine purification comprising a bioreactor vessel containing a composition comprising an aqueous brine solution comprising one or more inorganic salts, one or more organic compounds, optionally one or more microbial nutrients, and particles having an average particle size in the range from about 1 to about 200 µm and a particle density greater than about 1.5 g/cm³ coated with biofilm comprising microbes and extracellular polymer substances.

### Detailed Description of the Invention

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description making apparent to those skilled in the art how the several forms of the present invention may be embodied in practice.

Unless otherwise stated, a reference to a compound or component includes the compound or component by itself, as well as in combination with other compounds or components, such as mixtures of compounds.

As used herein, the singular forms "a," "an," and "the" include the plural reference unless the context clearly dictates otherwise.

Except where otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, and not to be considered as an attempt to limit the application of the doctrine of equivalents to the scope of the claims, each numerical parameter should be construed in light of the number of significant digits and ordinary rounding conventions.

Additionally, the recitation of numerical ranges within this specification is considered to be a disclosure of all numerical values and ranges within that range. For example, if a range is from about 1 to about 50, it is deemed to include, for example, 1, 7, 34, 46.1, 23.7, or any other value or range within the range.

### Definitions

As used herein, the term "microbes" refers to microorganisms capable of aerobic respiration and organics degradation.

The abbreviation "ATCC" refers to the "American Type Culture Collection". The ATCC is an internationally recognized biological depository institution under the Budapest Treaty.

As used herein, the term "immobilize" in reference to the microbes refers to adhering or adsorbing a substantial number, preferably a predominant number, of the total number of microbes on a substantially solid support. Examples of microbe immobilization include capture in a porous support, such as a filter medium, and adhesion of microbes to a solid support via a biofilm.

As used herein, the term "biofilm" refers to an aggregation of microbes in a matrix of extracellular polymer substances (EPS) adhered to a substantially solid support. The EPS may be generated by the microbes and/or provided or supplemented by natural and/or synthetic polymers not generated by the microbes. When the EPS is generated by the microbes, the EPS may comprise exopolysaccharide(s). The exopolysaccharide(s) play a significant role in adhering the biofilm to the solid support. Microbial EPS production generally increases when the concentration of sources of caloric cell energy is reduced to the minimum concentration required for cellular activity.

The term, "BOD" refers to "five day biological oxygen demand".

The term, "COD" refers to "chemical oxygen demand".

As used herein, the term "nutrient" refers to substances that provide nitrogen, phosphorus, and/or trace elements required by living microbes, including the microbes capable of organic compound degradation in the aqueous brine solution. Examples include yeast extract, urea (N), phosphoric acid (P), Fe, Mn, Se, etc. The nutrients may be comprised in the organic compound and/or inorganic salt components of the aqueous brine solution and/or may be added to the aqueous brine solution as additional components. The nutrients are preferably present in a concentration sufficient to provide an average of about 5 parts-by-weight nitrogen and about 1 part-by-weight phosphorus per 100 parts-by-weight BOD.

As used herein, the expression "total organic carbon" (abbreviated hereafter as "TOC") refers to the concentration of organic compounds in a given composition expressed in terms of the total weight of carbon atoms present in the organic compound molecules present in that composition. In other words, TOC excludes the contribution of atoms in organic molecules other than carbon to the total weight of the organic molecules when calculating the concentration of the organic compounds in terms of weight-percent or parts-per-million (ppm). TOC also excludes carbon atoms that are not present in organic compounds, such as the carbon atoms present in carbon dioxide.

As used herein, the term "multihydroxylated-aliphatic hydrocarbon compound" (abbreviated hereafter as "MAHC") refers to a compound that contains at least two hydroxyl groups covalently bonded to two separate vicinal carbon atoms and no ether linking groups. They contain at least two sp3 hybridized carbons each bearing an OH group. The MAHCs include any vicinal-diol (1,2-diol) or triol (1,2,3-triol) containing hydrocarbon including higher orders of contiguous or vicinal repeat units. The definition of MAHC also includes for example one or more 1,3- 1,4-, 1,5- and 1,6-diol functional groups as well. Geminal-diols, for example, are precluded from this class of MAHCs.

The MAHCs contain at least about 2, preferably at least about 3, up to about 60, preferably up to about 20, more preferably up to about 10, even more preferably up to about 4, and yet more preferably up to about 3, carbon atoms and can contain, in addition to aliphatic hydrocarbon, aromatic moieties or heteroatoms including for example halide, sulfur, phosphorus, nitrogen, oxygen, silicon, and boron heteroatoms; and mixtures thereof. The MAHCs may also be a polymer such as polyvinyl alcohol.

The terms "glycerin", "glycerol" and "glycerine", and esters thereof, may be used as synonyms for the compound 1,2,3-trihydroxypropane, and esters thereof.

As used herein, the term "chlorohydrin" means a compound containing at least one hydroxyl group and at least one chlorine atom covalently bonded to two separate vicinal aliphatic carbon atoms and no ether linking groups. Chlorohydrins are obtainable by replacing one or more hydroxyl groups of MAHCs with covalently bonded chlorine atoms via hydrochlorination. The chlorohydrins contain at least about 2, and preferably at least about 3, up to about 60, preferably up to about 20, more preferably up to about 10, even more preferably up to about 4, and yet more preferably up to about 3, carbon atoms and, in addition to aliphatic hydrocarbon, can contain aromatic moieties or heteroatoms including for example halide, sulfur, phosphorus, nitrogen, oxygen, silicon, and boron heteroatoms, and mixtures thereof. A chlorohydrin that contains at least two hydroxyl groups is also a MAHC.

The term "epoxide" means a compound containing at least one oxygen bridge on a carbon-carbon bond. Generally, the carbon atoms of the carbon-carbon bond are contiguous and the compound can include other atoms than carbon and oxygen atoms, like hydrogen and halogens, for example. Preferred epoxides are ethylene oxide, propylene oxide, glycidol and epichlorohydrin, or their derivatives.

The term "TAFFY process" refers to a popular industrial process for preparing epoxy polymers where bisphenol-A and epichlorohydrin are reacted in presence of sodium hydroxide.

As used herein, the term "hetero atom" refers to an atom of the Periodic Table of Elements other than a carbon atom or a hydrogen atom.

As used herein, the expression, "liquid phase" refers to a continuous intermediate phase between gas phase and a solid phase that may optionally comprise a minor amount of gas and/or solid discrete phase(s). The liquid phase may comprise one or more immiscible liquid phases and may contain one or more dissolved solids, such as one or more acids, bases, or salts.

As used herein, the expression "vapor phase" refers to a continuous gaseous phase that may optionally comprise a minor amount of liquid and/or solid discrete phase(s) (e.g., aerosol). The vapor phase may be a single gas or a mixture, such as a mixture of two or more gases, two or more liquid discrete phases, and/or two or more solid discrete phases.

As used herein, the term "aerated" means that the referenced liquid-phase substance or composition contains molecular oxygen, alone or mixed with one or more other gases, dissolved and/or dispersed in the substance or composition. The oxygen may be introduced to the substance or composition as a pure gas, as a gas admixed with other gases, such as nitrogen, e.g., air or air enriched with oxygen gas, or via chemical decomposition, such as through the introduction of hydrogen peroxide. The introduction of oxygen may be carried out by injecting oxygen-containing gas into the referenced liquid-phase substance or composition, agitation at the liquid surface interface, and/or via an oxygen-permeable membrane, for example.

Standard test methods commonly accepted in the industry are used for parameters (such as BOD, TOC, etc) discussed in the present invention.

### Aqueous Brine Solution

The aqueous brine solution treated according to the present invention comprises one or more inorganic salts and one or more organic compounds.

The one or more inorganic salts comprise at least about 80, preferably at least about 90, more preferably at least about 95, even more preferably at least about 99, and yet more preferably at least about 99.9, weight-percent sodium chloride.

The aqueous brine solution preferably comprises at least about 10, more preferably at least about 14, more preferably at least about 17, up to saturation, more preferably up to about 23, weight-percent inorganic salt(s).

In another preferred embodiment, the aqueous brine solution preferably comprises at least about 10, more preferably at least about 14, more preferably at least about 17, up to saturation, more preferably up to about 23, weight-percent sodium chloride.

The one or more organic compounds may be selected from any known organic compounds. The organic compounds are preferably compounds that contain moieties amenable to forming volatile oxidation fragments and/or carbon dioxide via biological oxidation. The organic compounds are preferably hydrocarbon compounds comprising one or more, preferably multiple, carbon atoms, one or more, preferably multiple, hydrogen atoms, and optionally one or more, preferably multiple, hetero atoms. The hetero atom(s) is/are preferably selected from O, N, and halogens, such as Cl.

The organic compounds are preferably hydrocarbon compounds having one or more functional groups. Preferred functional groups include hydroxy, ester, acid, glycidyl, and amine groups, combinations thereof, and salts of salt-forming functional groups, such as salts of acid and amine groups.

The organic compounds preferably have a number average molecular weight, MWₙ, of at least about 40, more preferably at least about 60, preferably up to about 500, more preferably up to about 300, g/mole.

Examples of preferred organic compounds include (a) one or more multihydroxylated-aliphatic hydrocarbon compounds, esters thereof and/or monoepoxides thereof, and/or dimers, trimers and/or oligomers thereof, and/or halogenated and/or aminated derivatives thereof, (b) one or more organic acids preferably having from 1 to 10 carbon atoms, esters thereof, monoepoxides thereof and/or salts thereof, (c) one or more ketols such as 1-hydroxy-2-propanone (d) one or more alkylene bisphenol compound(s) and/or epoxide(s), diols and/or chlorohydrins thereof, and/or (e) aniline, toluene, methylene dianiline, and/or phenol.

Preferred multihydroxylated-aliphatic hydrocarbon compounds include for example 1,2-ethanediol; 1,2-propanediol; 1,3-propanediol; 3-chloro-1,2-propanediol; 2-chloro-1,3-propanediol; 1,4-butanediol; 1,5-pentanediol; cyclohexanediols; 1,2-butanediol; 1,2-cyclohexanedimethanol; 1,2,3-propanetriol (also known as, and used herein interchangeable as, "glycerin", "glycerine", or "glycerol"); and mixtures thereof. Preferably, the MAHCs in the effluents treated according to the present invention include for example 1,2-ethanediol; 1,2-propanediol; 1,3-propanediol; and 1,2,3-propanetriol; with 1,2,3-propanetriol being most preferred.

Examples of esters of MAHCs include ethylene glycol monoacetate, propanediol monoacetates, glycerin monoacetates, glycerin monostearates, glycerin diacetates, and mixtures thereof.

Examples of monoepoxides of MAHCs include glycidol, dichloropropyl glycidyl ethers and epichlorohydrin.

Examples of organic acids include formic acid, acetic acid, propionic acid, lactic acid and glycolic acid.

Examples of alkylene bisphenol compounds include bisphenol A and bisphenol F, as well as derivatives of these compounds perhaps also containing epoxide groups.

The organic compounds are preferably present in a total organic carbon (TOC) concentration greater than about 100 ppm, more preferably greater than about 500 ppm, even more preferably greater than about 1,000 ppm, and still more preferably greater than about 5,000 ppm.

Preferred amounts of the preferred organic compounds are presented below in Table 1 based on the total weight of the respective organic compound in the aqueous brine solution.

**TABLE 1**

| Preferred Concentrations of Organic Compounds in Parts-per-Million | | | | | | |
|---|---|---|---|---|---|---|
| Organic Compound | Preferred Minima | | | Preferred Maxima | | |
| Glycerine | 0 | 500 | 2,000 | 5,000 | 10,000 | 50,000 |
| Glycidol | 0 | 50 | 200 | 500 | 1,000 | 5,000 |
| 1-Hydroxy-2-propanone | 0 | 10 | 40 | 100 | 300 | 1,000 |
| Bis-Ethers | 0 | 0.01 | 0.1 | 1 | 5 | 10 |
| Dichloropropyl glycidyl ethers | 0 | 0.01 | 0.1 | 11 | 22 | 33 |
| Epichlorohydrin | 0 | 0.01 | 0.1 | 1 | 10 | 100 |
| Bisphenol A | 0 | 100 | 500 | 5,000 | 10,000 | 50,000 |
| Bisphenol F | 0 | 100 | 500 | 5,000 | 10,000 | 50,000 |
| Diglycidyl ether of bisphenol A | 0 | 100 | 500 | 5,000 | 10,000 | 50,000 |
| Aniline | 0 | 100 | 500 | 5,000 | 10,000 | 50,000 |
| Methylene dianiline | 0 | 100 | 500 | 5,000 | 10,000 | 50,000 |
| Formate | 0 | 1 | 5 | 75 | 400 | 1,000 |
| Acetate | 0 | 1 | 5 | 75 | 400 | 1,000 |
| Lactate | 0 | 1 | 5 | 75 | 400 | 1,000 |
| Glycolate | 0 | 1 | 5 | 75 | 400 | 1,000 |

The aqueous brine solution is preferably the product of a process wherein a base comprising sodium hydroxide is reacted with a compound having at least one chlorine atom per molecule to form one or more inorganic salts comprising at least about 80, more preferably at least about 90, even more preferably at least about 95, and yet more preferably at least about 99, and yet more preferably at least 99.9, weight-percent sodium chloride.

In one embodiment, the aqueous brine solution provided in step (1) is produced by epoxidation of chlorohydrin(s) by reacting chlorohydrins with sodium hydroxide. The chlorohydrins are preferably produced by contacting a reaction mixture comprising multihydroxylated-aliphatic hydrocarbon compounds and/or ester(s) thereof with at least one chlorinating feed stream comprising at least one chlorinating agent, optionally in the presence of water and one or more catalysts, in a reaction vessel under hydrochlorination conditions. The multihydroxylated-aliphatic hydrocarbon compounds preferably comprise glycerol. Preferably, at least about 50 weight-percent of the multihydroxylated-aliphatic hydrocarbon compounds is glycerol. The glycerol is preferably sourced from the production of oleochemicals or biodiesel. Such processes are disclosed, for example, in WO 2006/020234, WO 2005/05147, WO 2006/100318, EP-A-1687248, and EP-A-1762556. The relevant disclosure of each of the above documents is incorporated herein by reference.

The brine sourced from the above dehydrochlorination process generally comprises one or more multihydroxylated-aliphatic hydrocarbon compounds, esters thereof and/or monoepoxides thereof, and/or dimers, trimers and/or oligomers thereof, and/or halogenated and/or aminated derivatives thereof. Preferred amounts of such compounds that may be present in the aqueous brine solution are specified above in Table 1.

In another embodiment, the aqueous brine solution provided in step (1) is produced by epoxidation of at least one polyphenol compound in the presence of an aqueous base comprising sodium hydroxide. In a preferred embodiment, the polyphenol compound comprises bisphenol A and the brine is preferably sourced from a TAFFY process for making liquid epoxy resins. In another preferred embodiment, the polyphenol compound is bisphenol F and/or one or more resols obtainable as a reaction product of diphenols with an aldehyde, such as formaldehyde and the brine is preferably sourced from a process for making liquid epoxy novolac (LEN). The epoxidation is preferably carried out by reacting at least one polyphenol with epichlorohydrin in the presence of an aqueous base comprising sodium hydroxide. The epichlorohydrin is preferably sourced from a process for making epichlorohydrin such as described above.

The brine sourced from the above epoxidation process generally comprises one or more polyphenol compounds and/or glycidyl ethers of the one or more polyphenol compounds. Preferred amounts of polyphenol compounds and epoxidized polyphenol compounds that may be present in the aqueous brine solution are specified above in Table 1.

In another preferred embodiment, the aqueous brine solution provided in step (1) is produced by contacting a vapor phase effluent comprising a chlorinating agent and one or more organic compounds with an aqueous base comprising sodium hydroxide for removing the chlorinating agent from the vapor phase effluent. In a preferred embodiment, the source of the vapor phase effluent is a chemical reactor. The chlorinating agent is preferably hydrogen chloride. The reaction mixture is preferably a liquid phase reaction mixture. The contacting is preferably carried out using a vapor-liquid contacting device.

In another preferred embodiment, the aqueous brine solution provided in step (1) is produced by neutralization of hydrogen chloride used to catalyze the reaction of aniline with formaldehyde to make methylene dianiline (MDA), which is useful for the production of (poly)isocyanates. Aniline, toluene and other suitable solvents may also be used extraction of MDA and other desirable products. The removal of hydrogen chloride is preferably carried out by a process described in the previous paragraph. The brine sourced from the neutralization step generally comprises aniline, toluene (if used as solvent), methylene dianiline and/or phenol.

The aqueous brine solution containing aniline, toluene and/or methylene dianiline is preferably subjected to azeotropic distillation to remove aniline, toluene, and/or methylene dianiline present in the aqueous brine solution prior to providing the aqueous brine solution in step (1). At least about 50, more preferably at least about 80, more preferably at least about 90, weight-percent of aniline, toluene and/or methylene dianiline is removed from the aqueous brine solution prior to providing the aqueous brine solution in step (1). The aqueous brine solution provided in step (1) is preferably not been subjected to a stripping unit operation to remove aniline and/or methylene dianiline prior to the first redissolution operation according to the present invention.

Preferred amounts of aniline, methylene dianiline and other chemicals that may be present in the aqueous brine solution are specified above in Table 1.

### Microbes

The present invention comprises microbes capable of biodegradation of one or more of the above organic compounds in the presence of an aqueous brine solution having a high sodium chloride concentration and a process for isolating and adapting such microbes.

A process for obtaining salt-tolerant living microbes capable of biologically oxidizing hydrocarbon compounds in an aqueous brine composition comprising sodium chloride according to the present invention comprises:
(1) providing an aqueous composition comprising living microbes, one or more hydrocarbon compounds, oxygen, an osmotically acceptable concentration of two or more inorganic salts comprising sodium chloride and, optionally, one or more nutrients for the living microbes as required for the respiration, growth and/or propagation of the living microbes;
(2) introducing into the aqueous composition provided in (1) one or more substances comprising hydrocarbon compounds, oxygen, two or more inorganic salts comprising sodium chloride and, optionally, water and/or one or more nutrients for the living microbes as required for the respiration, growth and/or propagation of the living microbes; and
(3) increasing the sodium chloride concentration of the aqueous composition at a rate that allows at least some microbes to survive and adapt to the change in sodium chloride concentration; wherein step (3) comprises increasing the weight-percent sodium chloride relative to the total amount of inorganic salt(s) in the aqueous composition.

The weight-percent sodium chloride based on the total amount of inorganic salt(s) in the aqueous composition is preferably increased by at least about 1, more preferably at least about 5, even more preferably at least about 10, and yet even more preferably at least about 15, weight-percent.

The process of selecting and/or adapting the microbes is preferably conducted at a temperature of at least about 15°C, more preferably at least about 30°C, more preferably at least about 40°C, up to preferably about 60°C, more preferably up to about 50°C, and even more preferably up to about 46°C.

The aqueous brine solution contacted in step (a) is preferably adjusted to and/or maintained at a pH of at least about 6.5, more preferably at least about 7, up to preferably about 8.5, and more preferably up to about 8.

The brine is preferably a brine stream have a flow rate relative to the living microbes during contacting (a). The contacting (a) is preferably conducted in a bioreactor vessel having at least one inlet and at least one outlet for the brine stream. The flow rate of the brine stream is such that the hydraulic residence time in the vessel is preferably less than about 100 hours, more preferably less than about 24 hours, even more preferably less than about 12 hours and preferably greater than about 6 hours, and more preferably greater than about 10 hours.

Oxygen may be provided to the living microbes by various means. Examples include aeration of the aqueous brine solution, such as by injection of an oxygen-containing gas, such as air, into the aqueous brine solution or exposing the microbe-containing brine solution to an oxygen-containing gas such as air, such as by spraying the brine solution through an oxygen-containing gas or contacting the brine solution with an oxygen-containing gas via a vapor-liquid contacting device; immobilization of the microbes on a solid support and repeatedly conveying the immobilized microbes from immersion in the aqueous brine solution into an oxygen-containing atmosphere such as air and re-immersing the immobilized microbes in the aqueous brine solution; and/or immobilizing the microbes on an oxygen-permeable membrane, exposing the surface of the oxygen-permeable membrane having the immobilized microbes to the aqueous brine solution to be treated and exposing the opposite surface of the oxygen-permeable membrane to an oxygen-containing gas such as air. Oxygen is provided at a rate sufficient to maintain aerobic microbial respiration in the living microbes.

The sodium chloride concentration is preferably increased at a rate not greater than about 10, more preferably not greater than about 6, and even more preferably not greater than about 1, percent per four hydraulic residence times. The sodium chloride concentration may preferably be increased at a rate of at least about 0.4 percent per four hydraulic residence times.

The sodium chloride concentration is preferably increased according to step (2) until the sodium chloride concentration of the aqueous composition is at least about 15, more preferably at least about 17, and yet more preferably at least about 19, and even yet more preferably at least about 20, weight-percent. The aqueous composition provided in step (1) preferably has a sodium chloride concentration less than about 10, more preferably less than about 6, and even more preferably less than about 4, weight-percent, and preferably has a sodium chloride concentration of at least about 1, preferably at least about 2, and even more preferably at least about 3, weight-percent.

The living microbes are preferably a population of diverse microbes capable of organic compound degradation. An example of such a population is microbes from activated sludge in a wastewater treatment plant, particularly microbes used to treat brackish or salty wastewater. Another example of such a population is microbes isolated from natural bodies of highly saline water, such as from the Dead Sea or from the Great Salt Lake in Utah, U.S.A.

In a preferred embodiment, the living microbes comprise bacteria. In a particularly preferred embodiment, the microbes comprise bacteria belonging to the genus *Vibrio* and/or *Halomonas.* In particular, the microbes comprise bacteria belonging to the species *Vibrio alginolyticus, Halomonas salina* and/or *Halomonas campaniensis.* Such microbes may be naturally present in the microbe population or may be obtained, or innoculated, from a culture of such microbes.

Some or all of the microbes adapted according to the above process may be cultured and/or obtained from a deposit maintained by a biological depository institution, such as the ATCC. In particular, *Vibrio alginolyticus* may be obtained under ATCC No. 17749 and *Halomonas salina* may be obtained under ATCC No. 49509. *Halomonas campaniensis* has been isolated from a mineral pool near the Campania region of Southern Italy, characterized in Romano et al., Int. J. Syst. Evol. Microbiol. 55:2236 (2005), and registered under ATCC No. BAA-966 and DSM No. 15293, which is incorporated by reference herein in its entirety.

Another aspect of the present invention is microbes adapted to grow in the presence of oxygen and a brine solution comprising one or more organic compounds, one or more nutrients other than the one or more organic compounds as required for growth of the microbes, and at least about 17, preferably at least about 18, more preferably at least about 20, and even more preferably at least about 22, weight-percent sodium chloride. The adapted microbes may comprise one or more microbes of the above microbes adapted according to the above process and/or microbes cultured and/or obtained from a biological depository institution.

Another aspect of the present invention is an aqueous composition comprising one or more organic compounds, a population of living microbes immersed in the aqueous composition in the presence of oxygen, one or more nutrients other than the one or more organic compounds as required for growth of the microbes, and at least about 17, preferably at least about 18, more preferably at least about 20, and even more preferably at least about 22, weight-percent sodium chloride. The living microbes may comprise one or more of the above microbes adapted according to the above process and/or microbes cultured and/or obtained from a biological depository institution.

Another aspect of the present invention is an aqueous composition comprising at least about 15, preferably at least about 18, even more preferably at least about 20, and yet even more preferably at least about 22, weight-percent of one or more inorganic salts, one or more organic compounds, a population of living microbes immersed in the aqueous composition in the presence of oxygen, and one or more nutrients other than the one or more organic compounds as required for growth of the microbes, wherein the one or more inorganic salts comprise at least about 80 weight-percent sodium hydroxide. The living microbes may comprise one or more of the above microbes adapted according to the above process and/or microbes cultured and/or obtained from a biological depository institution.

Another aspect of the present invention is a composition comprising particles having a preferred average particle size of at least about 1, more preferably at least about 10, even more preferably at least about 60, and yet even more preferably at least about 100, up to about 300, more preferably up to about 200, µm and/or a preferred particle density greater than about 1.5, more preferably at least about 2, even more preferably at least about 2.4, g/cm³ coated with microbes adhered to the surface of the particles. The particles are preferably substantially nonflocculated and more preferably not flocculated. The microbes are preferably adhered to the surface of the particles via biofilm comprising microbes and extracellular polymer substances. The microbes may comprise one or more of the above microbes adapted according to the above process and/or microbes cultured and/or obtained from a biological depository institution.

### Brine Purification Process

The present invention provides a process for purifying concentrated industrially produced aqueous brine solutions via biodegradation of organic compounds through biochemical oxidation. The process produces volatile oxidation products, such as carbon dioxide, which are released from the aqueous brine solution. The purified aqueous brine solution recovered from the process may be subjected to further unit operations and/or electrrolyzed to form chlorine gas and/and sodium hydroxide or hypochlorite via the well-known chlor-alkali process.

The process for purifying brine comprises:
(1) providing an aqueous brine solution comprising one or more inorganic salts, one or more organic compounds, and optionally one or more microbial nutrients other than microbial nutrients comprised in the one or more inorganic salts and the one or more organic compounds; and
(2) conducting at least one unit operation for removing organic compounds from the aqueous brine solution provided in step (1) to obtain a first purified brine solution;
   wherein the aqueous brine solution contains at least about 10, more preferably at least about 15, even more preferably at least about 18, yet more preferably at least about 20, and even yet more preferably at least about 22, weight-percent up to saturation, and preferably up to about 22 weight-percent, of the one or more inorganic salts; at least about 80, more preferably at least about 90, even more preferably at least about 95, yet more preferably about 98, yet even more preferably at least about 99, weight-percent of the one or more inorganic salts is sodium chloride; the one or more organic compounds comprise organic compounds; and the at least one unit operation comprises:
   (a) contacting the aqueous brine solution with living microbes capable of oxidizing the organic compounds in the presence of oxygen;
   (b) optionally adding biological nutrients to the aqueous brine solution proportional to microbial demand for biological nutrients not satisfied by the aqueous brine solution; and
   (c) separating the microbes and from the aqueous brine solution to obtain the first purified brine solution.

The living microbes are preferably one or more species of microbes selected from the microbes described in the previous section above.

The contacting step (a) is preferably is preferably conducted at a temperature of at least about 15°C, more preferably at least about 30°C, more preferably at least about 40°C, up to preferably about 60°C, more preferably up to about 50°C, and even more preferably up to about 46°C.

The aqueous brine solution contacted in step (a) is preferably adjusted to and/or maintained at a pH of at least about 6.5, more preferably at least about 7, up to preferably about 8.5, more preferably up to about 8.

The brine is preferably a brine stream have a flow rate relative to the living microbes during contacting (a). The contacting (a) is preferably conducted in a bioreactor vessel having at least one inlet and at least one outlet for the brine stream. The flow rate of the brine stream is such that the hydraulic residence time in the vessel is preferably less than about 100 hours, more preferably less than about 24 hours, even more preferably less than about 12 hours and preferably greater than about 6 hours, and more preferably greater than about 10 hours.

The vessel may actually be more than one physical vessel. It may be two or more vessels in series, or two or more vessels in parallel, or some combination of the two, in order to accommodate the required flow rate of brine to be treated.

Oxygen may be provided to the living microbes by various means. Examples include aeration of the aqueous brine solution, such as by injection of an oxygen-containing gas, such as air, into the aqueous brine solution or exposing the microbe-containing brine solution to an oxygen-containing gas such as air, such as by spraying the brine solution through an oxygen-containing gas or contacting the brine solution with an oxygen-containing gas via a vapor-liquid contacting device; immobilization of the microbes on a solid support and repeatedly conveying the immobilized microbes from immersion in the aqueous brine solution into an oxygen-containing atmosphere such as air and re-immersing the immobilized microbes in the aqueous brine solution; and/or immobilizing the microbes on an oxygen-permeable membrane, exposing the surface of the oxygen-permeable membrane having the immobilized microbes to the aqueous brine solution to be treated and exposing the opposite surface of the oxygen-permeable membrane to an oxygen-containing gas such as air. Oxygen is provided at a rate sufficient to maintain aerobic microbial respiration in the living microbes.

When the microbes are dispersed within the bioreactor, they may be separated from the aqueous brine solution by filtration, straining, centrifugal separation, hydrocyclone separation and/or gravity settling. Each of these separation processes is preferably facilitated by immobilizing the microbes on substantially solid particles having a preferred average particle size of at least about 1, more preferably at least about 20, more preferably at least about 60, and even more preferably at least about 100, µm and preferably up to about 300, more preferably up to about 180, and even more preferably up to about 150, µm and/or a particle density of at least about 1.5, more preferably at least about 2, even more preferably at least about 2.4, g/cm³. The particles preferably have a rough surface to facilitate adhesion of the microbes to the surface. The particles preferably also have a substantially hydrophobic surface for the same reason.

An example of suitable particles is microsand, such as ACTISAND™, a quartz sand having a nominal average particle size of about 150 µm and a particle density (specific gravity) of about 2.65 g/cm³, available from Veolia Water Solutions & Technologies of Saint Maurice-Cedex, France.

The microbes are immobilized on the surface of the particles by adhering them to their surface. Microbes capable of forming biofilms may be adhered to the particles by contacting the living microbes with the particles under gentle agitation and conditions suitable to support microbial BOD reduction/consumption while facilitating EPS production for a time period sufficient to develop biofilms on the particles and colonize the biofilms with the microbes. Microbes not capable of forming stable adherant biofilms on the particles may be immobilized on the surface of the particles by adding a natural and/or synthetic adhesive polymer to a mixture of the microbes with the particles to adhere the microbes to the particles. An example of a suitable natural polymer is albumin. An example of a suitable synthetic polymer is a polyacrylamide, such as LT22S cationic polyacrylamide available from Ciba Specialty Chemicals, Basal, Switzerland.

Immobilizing the microbes on particles having a preferred average particle size facilitates separation via filtration and/or straining, because the filter medium may have a larger average pore size than the size that would otherwise be required to filter out the microbes per se and, thereby reduces the pressure required for filtration and the rate at which the filter medium becomes clogged with fine particles.

Immobilizing the microbes on particles having a preferred density provides ballast to the particles to accelerate separation via centrifugal separation, hydrocyclone separation, and/or gravity settling.

The microbes may also be separated from the treated aqueous brine solution by contacting the aqueous brine solution with a device that permits the flow of aqueous brine solution while maintaining the microbes relatively stationary relative to the flow of aqueous brine solution. The device may, for example, be microbes immobilized on a filter medium having a pore size sufficient to allow passage of the aqueous brine solution through the filter medium, such as by forming a biofilm comprising the microbes on the filter medium. The device can also be a surface in contact with the brine solution, such as a bank of tubes or a corrugated surface, having microbes adhered to the surface, such as via a biofilm. The device may comprise a polymeric support known in the field of bioreactors having a porous surface, which may optionally contain activated carbon.

The immobililization of microbes on particles or filter media may be carried out before or after adaptation of the microbes to the salt concentration of the aqueous brine solution to be treated. If immobilization is via biofilm formation, formation of the biofilm prior to adaptation may be desired to facilitate rapid biofilm formation and to provide a protective environment for the microbes as the microbes are adapted to higher salt concentrations.

Since microbial populations tend to diminish during selection of the microbes via the survival of the fittest approach to selection of microbes capable of adapting to brine solutions containing high concentrations of sodium chloride, immobilization is preferably carried out after the microbial species diversity of the microbes contacting the brine solution remains relatively stable per 0.5 weight-percent increase in sodium chloride concentration.

The microbes may be separated from the aqueous brine solution by passing the aqueous brine solution through a membrane that is permeable to the liquid components of the aqueous brine solution and impermeable to the microbes. Suitable bioreactors are known as membrane bioreactors (MBR). Membranes suitable for this purpose, known as ultra- and nanofiltration membranes, are commercially available from various sources, such as Dow Water Solutions (The Dow Chemical Company, Midland, Michigan, U.S.A.) under the trademark FILMTEC® and Berghof (Eningen, Germany) under the trademark HYPERM™ AE. The membranes preferably have a pore size in the nanofiltration range and are preferably made of polymers based on poly(vinylidene fluoride) (PVDF). The membrane preferably has an anti-fouling coating, such as the amphiphilic graft copolymer poly(vinylidene fluoride)-graft-polyoxyethylene methacrylate (PVDF-g-POEM).

The purified brine recovered from such further unit operations may be used to make chlorine gas and sodium hydroxide or hypochlorite via a conventional chlor-alkali process and/or may recycled as an aqueous brine washing solution for washing crystalline salts recovered from brine purification via crystallization.

Each process step may be carried out in a batch, semi-batch or continuous mode. Each process step is preferably carried out in a continuous mode. The total process from providing the aqueous brine solution in step (1) to production of the purified brine solution according to the present invention is preferably carried out in a continuous mode.

In order to achieve any desired effluent quality of the treated brine from the biological treatment process of the present invention, further purification steps may be used. These further purification steps may include filtration, adsorption and other commonly used physical-chemical unit operations.

The process and apparatus according to this invention may preferably be operated to yield at least about 90, more preferably at least about 95, and even more preferably at least about 98, weight-percent of the amount of sodium chloride per unit volume of the aqueous brine solution provided in step (1). The aqueous brine solution is preferably treated according to the present invention to provide a sodium chloride purity of at least about 80, more preferably at least about 95, and even more preferably at least about 99, percent.

In a preferred embodiment, the weight-ratio of the amount of organic compound to the amount of sodium chloride present in the aqueous brine solution treated according to step (2) of the process is preferably less than one-tenth, more preferably less than one-hundredth, and even more preferably less than one-thousandth, of the weight-ratio of the amount of organic compound to the amount of sodium chloride present in the aqueous brine solution provided in step (1).

### Brine Purification Apparatus

The above-described process may be conducted using an apparatus according to the present invention. The above-described process preferably includes a bioreactor for brine purification according to the present invention.

In one embodiment, the bioreactor comprises at least one bioreactor vessel containing salt-tolerant living microbes, wherein the salt-tolerant living microbes are the microbes according to the present invention described above.

In another embodiment, the bioreactor comprises a bioreactor vessel containing a composition comprising an aqueous brine solution comprising one or more inorganic salts, one or more organic compounds, optionally one or more microbial nutrients, and the substantially nonflocculated particles coated with microbes adhered to the surfaces of the particles described in the previous section.

Another aspect of the present invention is a chemical process apparatus for producing purified brine comprising a chemical reaction apparatus suitable for reacting a chlorine-atom containing compound with sodium hydroxide to make an aqueous brine solution and a brine purification apparatus according to the present invention, wherein the chemical reaction apparatus is connected to the brine purification apparatus and/or process for conducting an aqueous brine solution from the chemical reaction apparatus to the brine purification apparatus and the chemical reaction apparatus is connected to a source of aqueous sodium hydroxide solution for conducting the aqueous sodium hydroxide solution to the chemical reaction apparatus. The chemical reaction apparatus may be an apparatus suitable for making epichlorohydrin, epoxy resin(s) or methylene dianiline.

When the chemical reaction apparatus is suitable for making epichlorohydrin by reacting chlorohydrin(s) with sodium hydroxide (i.e., via dehydrochlorination), the chemical process apparatus may further comprise a hydrochlorination apparatus suitable for making chlorohydrin. The hydrochlorination apparatus is then preferably connected to the chemical reactor apparatus for conducting a stream comprising chlorohydrin(s) from the apparatus for making chlorohydrin(s) to the chemical reactor apparatus.

All references cited herein are specifically incorporated by reference herein.

The following examples are for illustrative purposes only and are not intended to limit the scope of the present invention.

### Example 1

In this Example 1, microbes are selected and adapted according to the present invention.

3.5 g/liter of a diverse microbial population comprising the species *Vibrio alginolyticus, Halomonas salina,* and/or *Halomonas campaniensis* is introduced into a bioreactor vessel containing an aqueous brine solution containing 3.5 wt. % sodium chloride and 500 mg/liter glycerol. The aqueous brine solution is fed at a rate in the range from 0.1 to 1.5 kg glycerol per kg microbes per day so as to maintain a 50 mg/liter glycerol concentration at the bioreactor outlet. A comparable outflow of the mixture in the bioreactor is provided to maintain a constant unit volume within the bioreactor. Sufficient nutrients are added to the aqueous brine stream to maintain the NH₄-N concentration at the bioreactor outlet at 10 mg/liter and the orthophosphate concentration at the bioreactor outlet at 5 mg/liter. The sodium chloride concentration is raised at a rate of about 0.5 wt. % per 4 hydraulic residence times while monitoring microbial health and adjusting the nutrient concentration to maintain the NH₄-N concentration at the bioreactor outlet at 10 mg/liter and the orthophosphate concentration at the bioreactor outlet at 5 mg/liter until a microbe population adapted to a brine solution containing 18.5 wt.% sodium chloride is obtained. The adapted microbe population comprises the species *Vibrio alginolyticus, Halomonas salina,* and/or *Halomonas campaniensis.*

### Example 2

This Example 2 illustrates the brine purification process according to the present invention.

A culture of 17.5 wt. % brine and 3 g/liter of suspended microbes adapted according to Example 1 is introduced into a laboratory aerobic bioreactor having a liquid holdup volume of ∼1.7 liter and maintained at a temperature of 44°C. The culture is fed with a brine stream containing 18 wt. % sodium chloride, and a concentration of 413 ppm TOC, and sufficient water to keep the bioreactor at 17.5% brine. The flow rate of the incoming brine is maintained art ∼170 ml/hr. A comparable outflow of the mixture in the bioreactor is provided to maintain a constant unit volume within the bioreactor. Sufficient nutrients are added to the aqueous brine stream to maintain the NH₄-N concentration at the bioreactor outlet at 10 mg/liter and the orthophosphate concentration at the bioreactor outlet at 5 mg/liter.

The composition of the clarified outflow, after gravity separation of the microbes from the brine, is 17.5 wt.% NaCl and a concentration of 80 ppm TOC. A further physical-chemical treatment may be utilized to further reduce the TOC concentration of the outflow to below 10 ppm.

As can be seen from the foregoing, the present invention is capable of obtaining a recovery of aqueous brine having very low TOC concentrations while minimizing the amount of brine requiring further treatment. The process according to the present invention also minimizes consumption and contamination of fresh water and does not introduce chemicals requiring further treatment or resulting in a net reduction of chlorine gas or hypochlorite production.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular means, materials and embodiments, the present invention is not intended to be limited to the particulars disclosed herein; rather, the present invention extends to all functionally equivalent structures, methods and uses, such as are within the scope of the appended claims.

### Aspects of the invention include the following embodiments:

Embodiment #1. A process for purifying brine comprising:
   (1) providing an aqueous brine solution comprising one or more inorganic salts, one or more organic compounds, and optionally one or more microbial nutrients other than microbial nutrients comprised in the one or more inorganic salts and the one or more organic compounds and
   (2) conducting at least one unit operation for removing organic compounds from the aqueous brine solution provided in step (1) to obtain a first purified brine solution,
      wherein the aqueous brine solution contains at least about 10 weight-percent of the one or more inorganic salts; at least about 80 weight-percent of the one or more inorganic salts is sodium chloride; and the at least one unit operation comprises:
      (a) contacting the aqueous brine solution with living microbes capable of oxidizing the organic compounds in the presence of oxygen;
      (b) optionally adding biological nutrients to the aqueous brine solution proportional to microbial demand for biological nutrients not satisfied by the aqueous brine solution; and
      (c) separating the microbes from the aqueous brine solution to obtain the first purified brine solution.
Embodiment #2. The process according to embodiment #1, wherein the aqueous brine solution provided in step (1) contains at least about 15 weight-percent inorganic salts.
Embodiment #3. The process according to embodiment #1, wherein the aqueous brine solution provided in step (1) contains at least about 18 weight-percent inorganic salts.
Embodiment #4. The process according to any one of the preceding embodiments, wherein the aqueous brine solution provided in step (1) has a total organic carbon concentration greater than about 500 ppm.
Embodiment #5. The process according to any one of the preceding embodiments, wherein the contacting step (a) is conducted at a temperature in the range from about 15°C to about 60°C.
Embodiment #6. The process according to any one of the preceding embodiments, wherein the microbes contacted with the aqueous brine solution are separated from the aqueous brine solution by filtration, straining, centrifugal separation, hydrocyclone separation and/or gravity settling.
Embodiment #7. The process according to any one of the preceding embodiments, wherein the microbes contacted with the aqueous brine solution are separated from the aqueous brine solution by passing the aqueous brine solution through a membrane that is permeable to the liquid components of the aqueous brine solution and impermeable to the microbes.
Embodiment #8. The process according to any one of the preceding embodiments, wherein a substantial number of microbes contacted with the aqueous brine solution are immobilized on a solid support, the aqueous brine solution provided in step (1) is contacted with the immobilized microbes, and the contacted aqueous brine solution is separated from the immobilized microbes.
Embodiment #9. The process according to embodiment #8, wherein the solid support is a particulate support having a density greater than about 1.5 g/cm³.
Embodiment #10. The process according to any one of the preceding embodiments, wherein the organic compounds are hydrocarbon compounds having multiple hetero atoms.
Embodiment #11. The process according to any one of the preceding embodiments, wherein the organic compounds are hydrocarbon compounds having one or more functional groups comprising hydroxy, ester, acid, glycidyl, and amine groups, combinations thereof, and salts thereof.
Embodiment #12. The process according to any one of the preceding embodiments, wherein the one or more organic compounds comprise(s) (a) one or more multihydroxylated-aliphatic hydrocarbon compound(s), ester(s) thereof and/or monoepoxides thereof, and/or dimers, trimers and/or oligomers thereof, and/or halogenated and/or aminated derivatives thereof, (b) one or more organic acids having from 1 to 10 carbon atoms, ester(s) thereof, monoepoxide(s) thereof and/or salt(s) thereof, (c) one or more ketols, (d) one or more alkylene bisphenol compound(s) and/or epoxide(s), diols and/or chlorohydrins thereof, and/or (e) aniline, methylene dianiline, and/or phenol.
Embodiment #13. The process according to embodiment #12, wherein the one or more multihydroxylated-aliphatic hydrocarbon compound(s) comprise(s) glycerol.
Embodiment #14. The process according to embodiment #12, wherein the one or more organic acids comprise(s) formic acid, acetic acid, propionic acid, lactic acid and/or glycolic acid and the one or more ketols comprises 1-hydroxy-2-propanone.
Embodiment #15. The process according to embodiment #12, wherein the one or more alkylene bisphenol compound(s) comprise(s) bisphenol A and/or bisphenol F.
Embodiment #16. The process according to any one of embodiment #10 to embodiment #14, wherein the aqueous brine solution provided in step (1) is produced by epoxidation of chlorohydrin(s) by reacting chlorohydrins with sodium hydroxide.
Embodiment #17. The process according to embodiment #16, wherein the chlorohydrin(s) is/are produced by contacting a liquid-phase reaction mixture comprising glycerol and/or ester(s) thereof and/or monochlorohydrin(s) and/or ester(s) thereof with at least one chlorinating feed stream comprising at least one chlorinating agent, optionally in the presence of water, one or more catalyst(s), and/or one or more heavy byproduct(s) in a reaction vessel under hydrochlorination conditions.
Embodiment #18. The process according to any one of embodiment #10, embodiment #12 or embodiment #15, wherein the aqueous brine solution provided in step (1) is produced by epoxidation of at least one alkylene bisphenol compound.
Embodiment #19. The process according to embodiment #12, wherein the one or more organic compounds of the aqueous brine solution provided in step (1) comprise aniline and/or methylene dianiline and is produced by sodium hydroxide neutralization of hydrogen chloride used to catalyze the reaction of aniline with formaldehyde to make methylene dianiline.
Embodiment #20. The process according to embodiment #19, wherein the aqueous brine solution produced by sodium hydroxide neutralization of hydrogen chloride is subjected to azeotropic distillation to remove at least 50 weight-percent of aniline and/or methylene dianiline present in the aqueous brine solution prior to providing the aqueous brine solution in step (1).
Embodiment #21. The process according to embodiment #20, wherein the aqueous brine solution provided in step (1) has not been subjected to a stripping operation to remove aniline and/or methylene dianiline.
Embodiment #22. The process according to any one of the preceding embodiments, wherein the total organic compound concentration (TOC) of the aqueous brine solution provided in step (1) is at least about 200 ppm.
Embodiment #23. The process according to any one of the preceding embodiments, wherein less than about 5 weight-percent of the inorganic salt of the aqueous brine solution provided in step (1) is sodium carbonate and/or sodium sulfate.
Embodiment #24. The process according to any one of the preceding embodiments, wherein the weight ratio of the total organic carbon (TOC) concentration of the first purified aqueous brine solution to the total organic carbon (TOC) concentration of the aqueous brine solution provided in step (1) less than about 1:20.
Embodiment #25. The process according to any one of the preceding embodiments, wherein the first purified aqueous brine solution separated in (c) comprises residual organic compounds and the residual organic compound concentration in the first purified aqueous brine solution is further reduced in one or more subsequent unit operations to obtain a second purified aqueous brine solution.
Embodiment #26. The process according to embodiment #25, wherein the one or more subsequent unit operations comprise chlorinolysis.
Embodiment #27. The process according to embodiment #25 or embodiment #26, wherein the one or more subsequent unit operations comprise contacting the first purified aqueous brine solution with activated carbon.
Embodiment #28. The process according to any one of embodiment #25 to embodiment #27, wherein the one or more subsequent unit operations comprise Fenton oxidation.
Embodiment #29. The process according to any one of embodiment #25 to embodiment #27, wherein the one or more subsequent unit operations comprise electro-oxidation.
Embodiment #30. The process according to any one of the preceding embodiments wherein the total organic carbon concentration of the purified aqueous brine solution is less than about 10 ppm.
Embodiment #31. The process according to any one of the preceding embodiments, wherein the purified aqueous brine solution is electrolyzed to form chlorine gas and sodium hydroxide.
Embodiment #32. The process according to any one of the preceding embodiments, wherein the residence time of the microbes in the aqueous brine solution is in the range from about 10 hours to about 100 hours.
Embodiment #33. The process according to any one of the preceding embodiments, wherein the weight-ratio of the one or more organic compounds to the microbes is in the range from about 0.1 to about 1.5.
Embodiment #34. The process according to any one of the preceding embodiments, wherein the first purified brine produced in step (c) has a TOC concentration less than about 80 ppm.
Embodiment #35. The process according to any one of the preceding embodiments, wherein the microbes comprise bacteria.
Embodiment #36. The process according to embodiment #35, wherein the bacteria belong to the genus *Vibrio* and/or *Halomonas.*
Embodiment #37. The process according to embodiment #36, wherein the bacteria comprise the species *Vibrio alginolyticus, Halomonas salina,* and/or *Halomonas campaniensis.*
Embodiment #38. Microbe adapted to grow in the presence of oxygen and a brine solution comprising one or more organic compounds, one or more nutrients other than the one or more organic compounds as required for growth of the microbes, and at least about 17 weight-percent sodium chloride
Embodiment #39. An aqueous composition comprising one or more organic compounds, a population of living microbes immersed in the aqueous composition in the presence of oxygen, one or more nutrients other than the one or more organic compounds as required for growth of the microbes, and at least about 17 weight-percent sodium hydroxide.
Embodiment #40. An aqueous composition comprising at least 15 weight-percent of one or more inorganic salts, one or more organic compounds, a population of living microbes immersed in the aqueous composition in the presence of oxygen, and one or more nutrients other than the one or more organic compounds as required for growth of the microbes, wherein the one or more inorganic salts comprise at least about 80 weight-percent sodium hydroxide.
Embodiment #41. A composition comprising particles having an average particle size in the range from about 1 to about 200 µm and a particle density greater than about 1.5 g/cm³ coated with biofilm comprising microbes and extracellular polymer substances.
Embodiment #42. A process for obtaining salt-tolerant living microbes capable of oxidizing hydrocarbon compounds in an aqueous brine composition comprising:
   (1) providing an aqueous composition comprising living microbes, one or more hydrocarbon compounds, oxygen, an osmotically acceptable concentration of inorganic salts comprising sodium chloride and, optionally, one or more nutrients for the living microbes as required for the respiration, growth and propagation of the living microbes,
   (2) introducing into the aqueous composition provided in (1) one or more substances comprising hydrocarbon compounds, oxygen, two or more inorganic salts comprising sodium chloride and, optionally, water and/or one or more nutrients for the living microbes as required for the respiration, growth and/or propagation of the living microbes; and
   (3) increasing the sodium chloride concentration of the aqueous composition at a rate which allows at least some microbes to survive and adapt to the change in sodium chloride concentration,
      wherein increasing the sodium chloride concentration according to step (3) comprises increasing the weight-percent sodium chloride relative to the total amount of inorganic salt(s) present in the aqueous composition.
Embodiment #43. The process according to embodiment #42, wherein the sodium chloride concentration is increased according to step (2) by at least about 10 weight-percent and the sodium chloride concentration of the aqueous composition after increasing the sodium chloride concentration according to (2) is at least about 17 weight-percent.
Embodiment #44. The process according to embodiment #42 or embodiment #43, wherein the living microbes comprise bacteria.
Embodiment #45. The process according to embodiment #44, wherein the bacteria comprise bacteria of the genus *Vibrio* and/or the genus *Halomonas.*
Embodiment #46. The process according to embodiment #45, wherein the bacteria comprise bacteria of the species *Vibrio alginolyticus, Halomonas salina,* and/or *Halomonas campaniensis.*
Embodiment #47. A process for reducing organic contamination of brine in a chemical process comprising subjecting a brine stream of the chemical process to the purification process of embodiment #1; wherein the organic content of purified brine is sufficiently low to be recycled back to the same chemical process or a different chemical process.
Embodiment #48. The process according to embodiment #12, wherein the chemical process is a process for making epichlorohydrin and the different chemical process is a chlor-alkali process.
Embodiment #49. The process according to embodiment #12, wherein the chemical process is a process for reacting a polyphenol compound with epichlorohydrin to make epoxy resins and the different chemical process is a chlor-alkali process.
Embodiment #50. The process according to embodiment #14, wherein the chemical process is a process for making liquid epoxy resin or solid epoxy resin from bisphenol-A and epichlorohydrin.
Embodiment #51. The process according to embodiment #14, wherein the chemical process is a process for making liquid epoxy novolac resin from bisphenol-F, or bisphenol-F oligomers, and epichlorohydrin.
Embodiment #52. The process according to embodiment #12, wherein the chemical process is a process for making methylene dianiline, or polymethylene dianiline oligomers from phenol and formaldehyde in the presence of a hydrochloric acid.
Embodiment #53. The process according to embodiment #12, herein the chemical process is a process for making epichlorohydrin from glycerin.
Embodiment #54. The process according to any one of embodiment #3 to embodiment #17, wherein the weight-ratio of the amount of organic compound to the amount of sodium chloride present in the second purified brine solution obtained in the second redissolution step is less than about one-hundredth of the weight-ratio of the amount of organic compound to the amount of sodium chloride present in the aqueous brine solution provided in step (1).
Embodiment #55. The process according to any one of the preceding embodiments, wherein the one or more organic compounds comprise(s) (a) one or more multihydroxylated-aliphatic hydrocarbon compound(s), ester(s) thereof and/or monoepoxides thereof, and/or dimers, trimers and/or oligomers thereof, and/or halogenated and/or aminated derivatives thereof, (b) one or more organic acids having from 1 to 10 carbon atoms, ester(s) thereof, monoepoxide(s) thereof and/or salt(s) thereof, (c) one or more alkylene bisphenol compound(s) and/or epoxide(s), diols and/or chlorohydrins thereof, and/or (d) aniline, methylene dianiline, and/or phenol.
Embodiment #56. The process according to embodiment #20, wherein the one or more multihydroxylated-aliphatic hydrocarbon compound(s) comprise(s) glycerol.
Embodiment #57. The process according to embodiment #20, wherein the one or more organic acids comprise(s) formic acid, acetic acid, lactic acid and/or glycolic acid.
Embodiment #58. The process according to embodiment #20, wherein the one or more alkylene bisphenol compound(s) comprise(s) bisphenol A and/or bisphenol F.
Embodiment #59. The process according to any one of embodiment #20 to embodiment #23, wherein the aqueous brine solution provided in step (1) is produced by epoxidation of chlorohydrin(s) by reacting chlorohydrins with sodium hydroxide.
Embodiment #60. The process according to embodiment #24, wherein the chlorohydrin(s) is/are produced by contacting a liquid-phase reaction mixture comprising glycerol and/or ester(s) thereof and/or monochlorohydrin(s) and/or ester(s) thereof with at least one chlorinating feed stream comprising at least one chlorinating agent, optionally in the presence of water, one or more catalyst(s), and/or one or more heavy byproduct(s) in a reaction vessel under hydrochlorination conditions.
Embodiment #61. The process according to any one of embodiment #20, embodiment #23 or embodiment #24, wherein the aqueous brine solution provided in step (1) is produced by epoxidation of at least one alkylene bisphenol compound.
Embodiment #62. The process according to embodiment #20, wherein the aqueous brine solution provided in step (1) comprises aniline, methylene dianiline and/or phenol and is produced by sodium hydroxide neutralization of hydrogen chloride used to catalyze the reaction of aniline with formaldehyde to make methylene dianiline (MDA).
Embodiment #63. The process according to embodiment #27, wherein the aqueous brine solution produced by sodium hydroxide neutralization of hydrogen chloride is subjected to azeotropic distillation to remove at least 50 weight-percent of aniline and/or methylene dianiline present in the aqueous brine solution prior to providing the aqueous brine solution in step (1).
Embodiment #64. The process according to embodiment #28, wherein the aqueous brine solution provided in step (1) has not been subjected to a stripping operation to remove aniline and/or methylene dianiline prior to the first redissolution operation.
Embodiment #65. The process according to any one of the preceding embodiments, wherein the total organic carbon concentration (TOC) of the aqueous brine solution provided in step (1) is at least about 200 ppm.
Embodiment #66. The process according to any one of the preceding embodiments, wherein less than about 5 weight-percent of the inorganic salt of the aqueous brine solution provided in step (1) is salt having carbonate and/or sulfate anions.
Embodiment #67. The process according to any one of the preceding embodiments, wherein the purified brine solution obtained in step (2) has a total organic carbon concentration less than about 10 ppm.
   i. Embodiment #68. The process according to any one of the preceding embodiments, wherein the purified brine is introduced into the anode side of an electrolytic cell as at least a portion of brine starting material for making (a) sodium hydroxide and (b) chlorine gas or hypochlorite via the chlor-alkali process.
Embodiment #69. The process according to any one of the preceding embodiments, wherein the process is a continuous process.
Embodiment #70. A bioreactor for brine purification comprising at least one bioreactor vessel containing salt-tolerant living microbes, wherein the salt-tolerant living microbes are microbes adapted to grow in the presence of oxygen and a brine solution comprising one or more organic compounds, one or more nutrients other than the one or more organic compounds as required for growth of the microbes, and at least about 17 weight-percent sodium chloride and/or microbes obtainable by the above process for obtaining salt-tolerant living microbes.
Embodiment #71. A bioreactor for brine purification comprising a bioreactor vessel containing a composition comprising an aqueous brine solution comprising one or more inorganic salts, one or more organic compounds, optionally one or more microbial nutrients, and particles having an average particle size in the range from about 1 to about 200 µm and a particle density greater than about 1.5 g/cm³ coated with biofilm comprising microbes and extracellular polymer substances.

## Claims

1. A process for obtaining salt-tolerant living microbes capable of oxidizing hydrocarbon compounds in an aqueous brine composition comprising:
(1) providing an aqueous composition comprising living microbes, one or more hydrocarbon compounds, oxygen, an osmotically acceptable concentration of inorganic salts comprising sodium chloride and, optionally, one or more nutrients for the living microbes as required for the respiration, growth and propagation of the living microbes,
(2) introducing into the aqueous composition provided in (1) one or more substances comprising hydrocarbon compounds, oxygen, two or more inorganic salts comprising sodium chloride and, optionally, water and/or one or more nutrients for the living microbes as required for the respiration, growth and/or propagation of the living microbes; and
(3) increasing the sodium chloride concentration of the aqueous composition at a rate which allows at least some microbes to survive and adapt to the change in sodium chloride concentration,
wherein increasing the sodium chloride concentration according to step (3) comprises increasing the weight-percent sodium chloride relative to the total amount of inorganic salt(s) present in the aqueous composition.

2. The process according to claim 1, wherein the sodium chloride concentration is increased according to step (2) by at least about 10 weight-percent and the sodium chloride concentration of the aqueous composition after increasing the sodium chloride concentration according to (2) is at least about 17 weight-percent.

3. The process according to claim 1 or 2, wherein the living microbes comprise bacteria.

4. The process according to claim 3, wherein the bacteria comprise bacteria of the genus *Vibrio* and/or the genus *Halomonas.*

5. The process according to claim 4, wherein the bacteria comprise bacteria of the species *Vibrio alginolyticus, Halomonas salina,* and/or *Halomonas campaniensis.*

6. The process according to any one of the preceding claims, wherein the process is a continuous process.

7. Microbe adapted to grow in the presence of oxygen and a brine solution comprising one or more organic compounds, one or more nutrients other than the one or more organic compounds as required for growth of the microbes, and at least about 17 weight-percent sodium chloride.

8. A composition comprising particles having an average particle size in the range from about 1 to about 200 µm and a particle density greater than about 1.5 g/cm³ coated with biofilm comprising microbes and extracellular polymer substances.

9. A bioreactor for brine purification comprising at least one bioreactor vessel containing salt-tolerant living microbes, wherein the salt-tolerant living microbes are microbes adapted to grow in the presence of oxygen and a brine solution comprising one or more organic compounds, one or more nutrients other than the one or more organic compounds as required for growth of the microbes, and at least about 17 weight-percent sodium chloride and microbes obtainable by the above process for obtaining salt-tolerant living microbes.
